# EUROPÄISCHE PATENTANMELDUNG

(11) **EP 4 327 638 A1**
(43) Veröffentlichungstag der Anmeldung: **28.02.2024**
(21) Anmeldenummer: 23179397.7
(22) Anmeldetag: 15.06.2023
(51) Int. Cl.: A01B 63/00, A01B 63/10, A01B 63/11, A01B 63/112, A01B 63/114, A01B 63/14

(54) **VERFAHREN ZUM BETREIBEN EINES LANDWIRTSCHAFTLICHEN ARBEITSSYSTEMS**

(30) Priorität: 25.08.2022 DE 102022121569
(71) Anmelder: CLAAS Tractor S.A.S., 78141 Vélizy-Villacoublay Cedex (FR)
(72) Erfinder: Birkmann, Christian, 33775 Versmold (DE); Schaub, Christian, 33098 Paderborn (DE)
(74) Vertreter: CLAAS Gruppe

(57) **Zusammenfassung**

Die vorliegende Erfindung betrifft ein Verfahren zum Betreiben eines landwirtschaftlichen Arbeitssystems, umfassend eine zumindest zwei Achsen (2, 3) aufweisende landwirtschaftliche Arbeitsmaschine (1) mit zumindest einem Kraftheber (14) sowie ein Anbaugerät (15), welches mittels des Krafthebers (14) mit der Arbeitsmaschine (1) zur Durchführung eines landwirtschaftlichen Arbeitsprozesses verbunden wird, sowie ein den Betrieb der Arbeitsmaschine (1) optimierendes Fahrerassistenzsystem (7), welches über eine Recheneinheit (9), eine Speichereinheit (10) und eine Bedien- und Anzeigeeinheit (8) verfügt, wobei durch die Recheneinheit (9) von zumindest einer Sensoranordnung (13) generierte Informationen, externe Informationen und in der Speichereinheit (10) hinterlegte Informationen verarbeitet werden, dass eine Achslast (F_{FA,z}, F_{RA,z}) an zumindest einer der Achsen (2, 3) mittels der zumindest einen Sensoranordnung (13) bestimmt wird, wobei zur Einstellung des Krafthebers (14) durch das Fahrerassistenzsystem (7) Ist-Datensätze (26, 27, 28, 29) zeitlich an die Durchführung des Arbeitsprozesses gekoppelt zyklisch bestimmt werden, wobei ein an den Achsen (2, 3) aktuell bestehendes Achslastverhältnis (24) als ein Ist-Datensatz (26) bestimmt wird und unter Verwendung zumindest eines weiteren zu bestimmenden Ist-Datensatzes (27, 28, 29) durch das Fahrerassistenzsystem (7) unter gleichzeitiger Berücksichtigung mehrerer sich gegenseitig beeinflussender Optimierungszielgrößen (42) Anweisungen (40) zur Ansteuerung des Krafthebers (14) generiert werden.

## Beschreibung

Die vorliegende Erfindung betrifft ein Verfahren zum Betreiben eines landwirtschaftlichen Arbeitssystems gemäß dem Oberbegriff des Anspruches 1 sowie ein landwirtschaftliches Arbeitssystem gemäß dem Oberbegriff des Anspruches 15.

Ein landwirtschaftliches Arbeitssystem umfasst eine zumindest zwei Achsen aufweisende landwirtschaftliche Arbeitsmaschine mit zumindest einem Kraftheber sowie ein Anbaugerät, welches mittels des Krafthebers mit der Arbeitsmaschine zur Durchführung eines landwirtschaftlichen Arbeitsprozesses verbunden wird bzw. ist. Für den Betrieb ist der Kraftheber zu konfigurieren, was manuell durch einen Bediener des Arbeitssystems erfolgen kann oder durch ein den Betrieb der Arbeitsmaschine optimierendes Fahrerassistenzsystem.

Die EP 2 269 432 B1 beispielsweise beschreibt eine Steuereinheit für eine Hydraulikanordnung einer hydraulisch betätigten Geräteschnittstelle an einem Traktor. Um die Steuerung eines Anpressdrucks für ein mit der Geräteschnittstelle verbundenes Anbaugerät zu verbessern, wird dort vorgeschlagen, dass an einer eine Achse umfassenden Achsanordnung des landwirtschaftlichen Fahrzeugs Mittel zur Erfassung eines Lastzustands der Achse vorgesehen und die Steuersignale zur Ansteuerung der Hydraulikanordnung in Abhängigkeit des erfassten Lastzustands an der Achse generierbar sind.

Eine als Traktor ausgeführte landwirtschaftliche Arbeitsmaschine mit einem den Betrieb der Arbeitsmaschine optimierenden Fahrerassistenzsystem ist aus der EP 3 932 158 A1 bekannt. Das Fahrerassistenzsystem umfasst zur Einstellung eines Krafthebers einen Hubwerkautomaten, der dazu eingerichtet ist, kennlinienbasiert zu arbeiten. Der Hubwerkautomat ist für eine optimierte Einstellung von wenigstens einem Arbeitsparameter des Traktors in Abhängigkeit von in einer Speichereinheit hinterlegten auswählbaren Regelstrategien und/oder Optimierungszielgrößen eingerichtet. Die auswählbare Regelstrategie umfasst eine Strategie "Effizienz", "Leistung", "Kosten", "Qualität", "Ertrag" oder eine Kombination der Strategien. Die auswählbaren Optimierungszielgrößen umfassen eine Zielgröße "Flächenleistung", "Flächenverbrauch", "Ertrag pro Fläche", "Kosten pro Fläche" und/oder "Arbeitsqualität". Die Regelung des Krafthebers durch das Fahrerassistenzsystem erfolgt basierend auf einer übergeordneten Zielstellung für das Arbeitssystem. Dabei können spezifischere Zielgrößen, wie beispielsweise Traktion oder die Einhaltung von für den Betrieb zulässiger Achslastverhältnisse, die zu einem Zielkonflikt führen, bei der Einstellung des Krafthebers zu Lasten der Regelstrategie bzw. Optimierungszielgröße nachrangig behandelt werden, so dass die Gesamteffizienz bei der Durchführung des landwirtschaftlichen Arbeitsprozesses unterhalb eines möglichen Optimums liegt.

Ausgehend vom vorstehend genannten Stand der Technik liegt der Erfindung die Aufgabe zugrunde, ein Verfahren zum Betreiben eines landwirtschaftlichen Arbeitssystems sowie ein landwirtschaftliches Arbeitssystem auszugestalten und weiterzubilden, sodass ein effizienterer Betrieb des Arbeitssystems unter Berücksichtigung von sich dynamisch ändernden Bedingungen während der Durchführung eines landwirtschaftlichen Arbeitsprozesses ermöglicht wird.

Diese Aufgabe wird durch ein Verfahren mit den Merkmalen des Anspruches 1 sowie durch ein landwirtschaftliches Arbeitssystem mit den Merkmalen des nebengeordneten Anspruches 15 gelöst. Vorteilhafte Ausführungsformen und Weiterbildungen sind den hiervon abhängigen Ansprüchen zu entnehmen.

Gemäß Anspruch 1 wird ein Verfahren zum Betreiben eines landwirtschaftlichen Arbeitssystems, umfassend eine zumindest zwei Achsen aufweisende landwirtschaftliche Arbeitsmaschine mit zumindest einem Kraftheber, insbesondere Heckkraftheber, sowie ein Anbaugerät, welches mittels des Krafthebers mit der Arbeitsmaschine zur Durchführung eines landwirtschaftlichen Arbeitsprozesses verbunden wird oder verbindbar ist, sowie ein den Betrieb der Arbeitsmaschine optimierendes Fahrerassistenzsystem, welches über eine Recheneinheit, eine Speichereinheit und eine Bedien- und Anzeigeeinheit verfügt, wobei durch die Recheneinheit von zumindest einer Sensoranordnung generierte Informationen, externe Informationen und in der Speichereinheit hinterlegte Informationen verarbeitet werden, dass eine Achslast an zumindest einer der Achsen mittels der zumindest einen Sensoranordnung bestimmt wird. Erfindungsgemäß ist vorgesehen, dass zur Einstellung des Krafthebers durch das Fahrerassistenzsystem Ist-Datensätze zeitlich an die Durchführung des Arbeitsprozesses gekoppelt zyklisch bestimmt werden, wobei ein an den Achsen aktuell bestehendes Achslastverhältnis als ein, sich insbesondere dynamisch ändernder, Ist-Datensatz bestimmt wird und unter Verwendung zumindest eines weiteren zu bestimmenden, sich insbesondere dynamisch ändernden, Ist-Datensatzes durch das Fahrerassistenzsystem unter gleichzeitiger Berücksichtigung mehrerer sich gegenseitig beeinflussender Optimierungszielgrößen Anweisungen zur Ansteuerung des Krafthebers generiert werden. Wesentlich ist die grundsätzliche Überlegung, dass durch eine dynamische Mehrzielregelung, welche dem durchzuführenden Optimierungsprozess zugrunde gelegt wird, die Gesamteffizienz des landwirtschaftlichen Arbeitssystems bei der Durchführung des landwirtschaftlichen Arbeitsprozesses gesteigert wird. Die Mehrzielregelung des Fahrerassistenzsystems berücksichtigt bei der Generierung der Anweisungen zur Ansteuerung des Krafthebers die Zielstellungen der sich gegenseitig beeinflussenden Optimierungszielgrößen.

Sich gegenseitig beeinflussende Optimierungszielgrößen bestehen unter anderem zwischen einer Bodenbearbeitungstiefe sowie der Erreichung und Einhaltung eines Schlupfes für gute Traktionseigenschaften der Arbeitsmaschine. Bei einem zu weit angehobenen Anbaugerät besteht die Gefahr der Überlastung der Reifen an der Hinterachse der Arbeitsmaschine.

Zudem wird eine Entlastung des Fahrers erreicht, da dieser keine manuellen Einstellungen für eine optimale Arbeitsperformance bei der Durchführung des Arbeitsprozesses vornehmen muss.

Hierzu können zur Bestimmung der weiteren, sich insbesondere dynamisch ändernden, Ist-Datensätze eine zeitlich an die Durchführung des Arbeitsprozesses gekoppelte zyklisch bestimmte Schlupfbestimmung, Arbeitstiefenbestimmung von Werkzeugen eines als Bodenbearbeitungsgerätes ausgeführten Anbaugerätes und/oder Reifeninnendruckbestimmung von als Reifen ausgeführten Bodeneingriffsmitteln verwendet werden. Schlupfbestimmung, Arbeitstiefenbestimmung und/oder Reifeninnendruckbestimmung werden durch das Fahrerassistenzsystem durchgeführt. Die Bestimmung des Achslastverhältnisses als, sich insbesondere dynamisch ändernder, Ist-Datensatz ermöglicht es, die Achslasten zwischen den Achsen in einen optimalen Bereich zu verschieben. Mittels der Bestimmung des Schlupfs als, sich insbesondere dynamisch ändernder, Ist-Datensatz kann das Antreiben der Arbeitsmaschine im traktionsfähigen Bereich abgesichert werden. Die Bestimmung der Arbeitstiefe als, sich insbesondere dynamisch ändernder, Ist-Datensatz kann zur Verringerung des Rollwiderstands am Anbaugerät verwendet werden. Ein weiterer Aspekt der Bestimmung der Arbeitstiefe als Ist-Datensatz kann darin bestehen, diesen Ist-Datensatz zur Steigerung des Zugkraftpotentials der Arbeitsmaschine unter Berücksichtigung der begrenzten Tragfähigkeit von Reifen sowie Achsen der Arbeitsmaschine verwendet werden. Die Reifeninnendruckbestimmung als, sich insbesondere dynamisch ändernder, Ist-Datensatz kann zur Einhaltung der zulässigen Achslasten für einen eingestellten Reifeninnendruck zu verwenden. Dabei kann berücksichtigt werden, dass maximal zulässige Achslasten für den aktuell eingestellten Reifeninnendruck nicht überschritten werden.

Gemäß einer Weiterbildung können zur Bestimmung von Abweichungen der zur Mehrzielregelung verwendeten Ist-Datensätze Soll-Datensätze vorgegeben werden, die aus einer Datenbank abgerufen, mittels eines in der Speichereinheit hinterlegten Expertensystems bestimmt und/oder durch einen Bediener mittels einer Mensch-Maschine-Schnittstelle, insbesondere auf einem natürlichsprachigen, interaktiven Dialog basierend, eingegeben werden. Die Datenbank kann bevorzugt in der Speichereinheit des Fahrerassistenzsystems hinterlegt sein. Alternativ oder zusätzlich kann die Datenbank auf einem entfernten Datenverarbeitungssystem hinterlegt sein, mit welchem das Fahrerassistenzsystem durch geeignete Kommunikationsmittel Daten austauschen kann. Das entfernte Datenverarbeitungssystem kann cloudbasiert ausgeführt sein. Die Mensch-Maschine-Schnittstelle kann die Bedien- und Anzeigeeinheit des Fahrerassistenzsystems sein oder eine mobile Datenverarbeitungsvorrichtung, wie ein Smartphone oder Tablet-PC.

Das Expertensystem kann auf hinterlegtem Expertenwissen basierend Soll-Datensätze bereitstellen. Das Expertensystem kann auch als ein funktionales Systemmodell für zumindest einen Teil des Arbeitssystems ausgebildet sein, welches in der Speichereinheit des Fahrerassistenzsystems hinterlegt sein kann. Zur Abbildung der funktionalen Zusammenhänge mittels des Systemmodells kann es vorgesehen sein, dass einem Soll-Datensatz mindestens ein Kennlinienfeld zugeordnet ist, wobei der Soll-Datensatz die Ausgangsgröße des jeweiligen Kennlinienfeldes ist. Dabei kann das Kennlinienfeld ganz allgemein die Abhängigkeit einer Ausgangsgröße von mindestens einer Eingangsgröße, insbesondere von zwei oder mehreren Eingangsgrößen, abbilden. So können einer Ausgangsgröße für den Soll-Datensatz des Achslastverhältnisses als Eingangsgrößen die Soll-Datensätze für einen maximal zulässigen Schlupf, Arbeitstiefe und/oder Reifeninnendruck zugeordnet sein. Dies gilt wegen der Mehrzielregelung für die anderen Soll-Datensätze als Ausgangsgrößen entsprechend.

Vorzugsweise können als Optimierungszielgrößen ein Ziel-Achslastverhältnis, eine Ziel-Belastung von gewichtsabstützenden Einrichtungen am Anbaugerät, eine Ziel-Arbeitstiefe, ein Ziel-Schlupfgrenzwert und eine vom Soll-Reifeninnendruck abhängige Maximal-Achslast durch das Fahrerassistenzsystem bestimmt werden.

Gewichtsabstützende Einrichtungen am Anbaugerät können Stützräder, Rollen und/oder Walzen sein.

Bevorzugt können die an den Achsen der Arbeitsmaschine auftretenden Achslasten und das darauf basierende Achslastverhältnis unter Berücksichtigung einer Arbeitsmaschinen- und Anbaugerätekonfiguration sowie von Betriebsparametern mittels der Recheneinheit des Fahrerassistenzsystems zeitlich an die Durchführung des Arbeitsprozesses gekoppelt zyklisch bestimmt werden. Die zyklische, in bestimmten, vorzugsweise konstanten, Zeitabständen, durchgeführte Bestimmung der an den Achsen der Arbeitsmaschine auftretenden Achslasten und des darauf basierenden Achslastverhältnisses unter Berücksichtigung der Arbeitsmaschinen- und Anbaugerätekonfiguration sowie von aktuellen Betriebsparametern ermöglicht es, dem Bediener annähernd in Echtzeit Informationen über die sich dynamisch ändernden Achslasten und das Achslastverhältnis während der Durchführung des Arbeitsprozesses bereitzustellen.

Vorteilhaft ist es, wenn für die Bestimmung der Achslasten und des Achslastverhältnisses zwischen an der Geräteschnittstelle angebauten Anbaugeräten und angehängten Anbaugeräten unterschieden wird.

So können bei einem angebauten Anbaugerät zur Bodenbearbeitung in einem ersten Schritt auf Werkzeuge des Anbaugerätes ausgeübte Werkzeugkräfte über Zugleistung und aktuelle Fahrgeschwindigkeit der Arbeitsmaschine sowie eine auf die zumindest eine gewichtsabstützende Einrichtung des Anbaugerätes abgestützte Vertikalkraft aus einem Momentengleichgewicht um eine der Achsen, insbesondere der Hinterachse, der Arbeitsmaschine bestimmt werden und in einem zweiten Schritt kann eine auf diese Achse einwirkende vertikale Achslast bestimmt werden.

Bei einem angehängten Anbaugerät zur Bodenbearbeitung können in einem ersten Schritt auf Werkzeuge des Anbaugerätes ausgeübte Werkzeugkräfte über Zugleistung und aktuelle Fahrgeschwindigkeit, ein von dem Anbaugerät auf die Arbeitsmaschine wirkendes Koppelmoment sowie eine vertikale Koppelkraft mittels Anbaugerätegeometrie und der Bestimmung eines Momentengleichgewicht um ein Anbaugerätestützrad bestimmt werden und in einem zweiten Schritt kann eine auf eine der Achsen, insbesondere die Hinterachse, einwirkende vertikale Achslast bestimmt werden.

Weiterhin kann in einem dritten Schritt das Achslastverhältnis bestimmt werden und in einem vierten Schritt kann eine Abschätzung eines Antriebsmomentes an den Achsen der Arbeitsmaschine durchgeführt werden. Die Ausführung des dritten und vierten Schrittes ist unabhängig davon, ob das Anbaugerät angehängt oder angebaut ist.

Insbesondere kann zur Arbeitstiefenbestimmung von Werkzeugen des Anbaugerätes die Position des Krafthebers durch Messung und/oder Berechnung bestimmt werden.

Alternativ oder zusätzlich kann die Arbeitstiefenbestimmung von Werkzeugen des Anbaugerätes anhand von Sensordaten zumindest eines Arbeitstiefensensors am Anbaugerät durchgeführt werden.

Zur Schlupfbestimmung können eine Fahrzeuggeschwindigkeit und eine Reifenumfangsgeschwindigkeit bestimmt werden. Die Fahrzeuggeschwindigkeit kann anhand von Radarsensor-Daten und/oder Positionsortungsdaten, GPS-Daten oder GNSS-Daten, ermittelt werden. Die Reifenumfangsgeschwindigkeit kann mittels eines an der Achse angeordneten Drehzahlsensors sowie in der Arbeitsmaschinenkonfiguration hinterlegten Daten zur Bereifung an der zumindest einen angetriebenen Achse der Antriebsmaschine ermittelt werden.

Insbesondere kann durch das Fahrerassistenzsystem zur Ansteuerung des Krafthebers unter gleichzeitiger Berücksichtigung der sich gegenseitig beeinflussender Optimierungszielgrößen eine optimale Position des Krafthebers, insbesondere von Oberlenker und Unterlenker eines als Dreipunkt-Krafthebers ausgeführten Krafthebers, bestimmt werden.

Gemäß einer bevorzugten Weiterbildung können durch das Fahrerassistenzsystem unter gleichzeitiger Berücksichtigung der sich gegenseitig beeinflussender Optimierungszielgrößen Anweisungen zur Ansteuerung von Aktoren des Anbaugerätes generiert werden. Die Aktoren des Anbaugerätes können hydraulisch, pneumatisch oder elektromechanisch betätigbar und/oder ansteuerbar sein.

Dabei kann wenigstens ein Aktor der zumindest einen gewichtsabstützenden Einrichtung und/oder wenigstens ein Aktor zur Verstellung der Arbeitstiefe von Werkzeugen des Anbaugerätes angesteuert werden. Beispielsweise kann durch eine Höhenverstellung der gewichtsabstützenden Einrichtung zur Reduzierung der Last auf diesen mehr Last auf der Arbeitsmaschine abgestützt werden.

Des Weiteren kann durch das Fahrerassistenzsystem eine simultane Höhenverstellung der Anbaugeräteschnittstelle und der zumindest einen gewichtsabstützenden Einrichtung durchgeführt werden. Durch eine simultane Höhenverstellung des Krafthebers und der eingestellten Höhe der zumindest einen gewichtsabstützenden Einrichtung kann eine Verstellung der Arbeitstiefe erreicht werden.

Durch das erfindungsgemäße Verfahren kann im Zuge der dynamischen Mehrzielregelung eine Steigerung des Zugkraftpotentials bei Sicherstellung der Bodenbearbeitung innerhalb eines definierten Bearbeitungstiefenbandes erreicht werden. Zudem kann eine Reduktion des Reifenverschleißes sowie von Reifenschäden durch das Verhindern von dauerhafter Überlastung von Reifen und Achsen erreicht werden. Das zusätzliche Zugkraftpotential kann darüber hinaus für eine erhöhte Bodenbearbeitungsgeschwindigkeit bzw. Flächenleistung, eine breitere Bodenbearbeitung durch Anbaugeräte größerer Arbeitsbreite oder einer Reduktion des flächenspezifischen Kraftstoffverbrauchs genutzt werden.

Weiterhin wird die eingangs gestellte Aufgabe durch ein landwirtschaftliches Arbeitssystem mit den Merkmalen des nebengeordneten Anspruches 15 gelöst.

Gemäß dem nebengeordneten Anspruch wird ein landwirtschaftlichen Arbeitssystems vorgeschlagen, umfassend eine zumindest zwei Achsen aufweisende landwirtschaftliche Arbeitsmaschine mit zumindest einem Kraftheber sowie ein Anbaugerät, welches mittels des Krafthebers mit der Arbeitsmaschine zur Durchführung eines landwirtschaftlichen Arbeitsprozesses verbunden ist, sowie ein den Betrieb der Arbeitsmaschine optimierendes Fahrerassistenzsystem, welches über eine Recheneinheit, eine Speichereinheit und eine Bedien- und Anzeigeeinheit verfügt, wobei die Recheneinheit dazu eingerichtet ist von zumindest einer Sensoranordnung generierte Informationen, externe Informationen und in der Speichereinheit hinterlegte Informationen zu verarbeiten, wobei zur Bestimmung einer Achslast an zumindest einer der Achsen eine Sensoranordnung vorgesehen ist, wobei das Fahrerassistenzsystem dazu eingerichtet ist, zur Einstellung des Krafthebers durch das Fahrerassistenzsystem Ist-Datensätze zeitlich an die Durchführung des Arbeitsprozesses gekoppelt zyklisch zu bestimmen, wobei ein an den Achsen bestehendes Achslastverhältnis als ein Ist-Datensatz bestimmt wird, und dass das Fahrerassistenzsystem dazu eingerichtet ist, unter Verwendung der Ist-Datensätze und gleichzeitiger Berücksichtigung mehrerer sich gegenseitig beeinflussender Optimierungszielgrößen Anweisungen zur Ansteuerung des Krafthebers zu generieren.

Das landwirtschaftliche Arbeitssystem ist insbesondere zur Durchführung des Verfahrens nach einem der Ansprüche 1 bis 14 eingerichtet. Auf alle Ausführung zum erfindungsgemäßen Verfahren darf verwiesen werden.

Die vorliegende Erfindung wird nachstehend anhand eines in den Zeichnungen dargestellten Ausführungsbeispieles näher erläutert.

Es zeigen:
- Fig. 1: schematisch eine landwirtschaftliche Arbeitsmaschine eines landwirtschaftlichen Arbeitssystems in Seitenansicht;
- Fig. 2: schematisch das landwirtschaftliche Arbeitssystem aus Arbeitsmaschine und angebautem Anbaugerät; und
- Fig. 3: eine schematische Übersicht der Struktur eines Fahrerassistenzsystems.

In den Figuren sind gleiche bzw. funktionsgleiche Bauteile oder Komponenten mit denselben Bezugszeichen versehen.

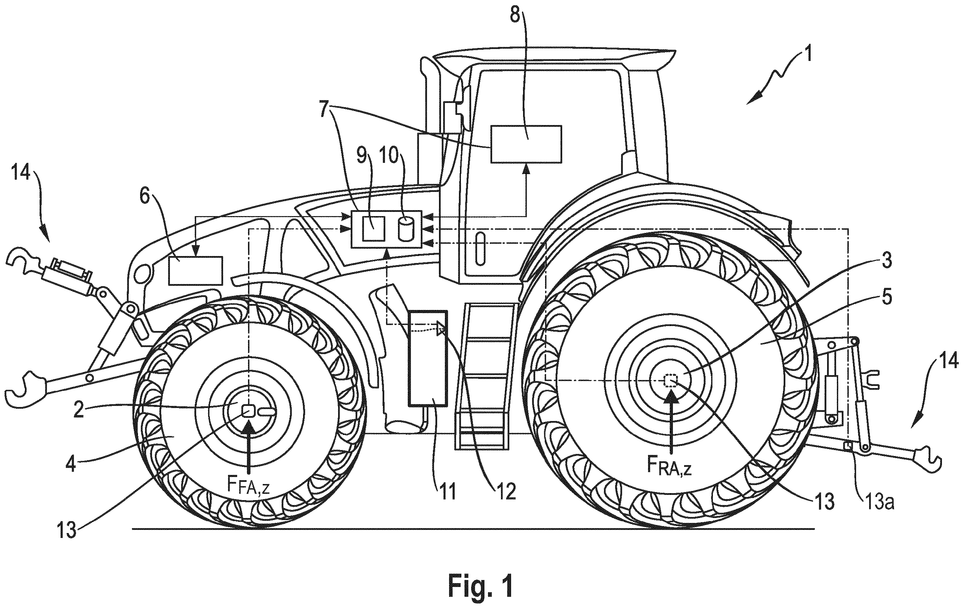

In Fig. 1 ist schematisch eine Arbeitsmaschine 1 eines landwirtschaftlichen Arbeitssystems in Seitenansicht dargestellt. Die als Traktor ausgeführte Arbeitsmaschine 1 umfasst an Achsen 2, 3 angeordnete Bodeneingriffsmittel 4, 5, die hier als Laufräder ausgeführt sind. Die Achse 2 wird nachfolgend als Vorderachse und die Achse 3 als Hinterachse bezeichnet. Die Arbeitsmaschine 1 ist mit einer - lediglich schematisch angedeuteten - Antriebseinheit 6 ausgestattet, die hier und vorzugsweise einen Verbrennungsmotor aufweist. Die Antriebseinheit 6 wirkt in üblicher Weise über einen Antriebsstrang auf die Bodeneingriffsmittel 4, 5. Vorzugsweise handelt es sich bei der Arbeitsmaschine 1 um eine allradgetriebene Arbeitsmaschine 1, sodass alle vier Bodeneingriffsmittel 4, 5 angetrieben bzw. antreibbar sind. In Fig. 1 sind an der Vorderachse 2 und der Hinterachse 3 angreifende vertikale Achslasten F_{FA,z} und F_{RA,z} exemplarisch dargestellt, aus welchen, unter Berücksichtigung weiterer Einflussgrößen, ein Achslastverhältnis 24 zyklisch bestimmt wird.

Die Arbeitsmaschine 1 weist Fahrerassistenzsystem 7 auf, dem eine Bedien- und Anzeigeeinheit 8 zugeordnet, die eine Informationsschnittstelle zum Bediener der Arbeitsmaschine 1 bereitstellt. Das Fahrerassistenzsystem 7 weist eine Speichereinheit 10 zum Hinterlegen von Daten und eine Recheneinheit 9 zur Verarbeitung der in der Speichereinheit 10 hinterlegten Daten auf.

In die Karosserie der Arbeitsmaschine 1 ist ein als Kraftstofftank ausgeführter Behälter 11 integriert. Der Behälter 11 ist mit einem Füllstandsensor 12 ausgeführt, welcher durch eine Signalleitung Messdaten an das Fahrerassistenzsystem 7 zur Auswertung überträgt.

Zumindest einer der Achsen 2, 3 der Arbeitsmaschine 1 ist eine Sensoranordnung 13 zugeordnet. Hier und bevorzugt ist die Sensoranordnung 13 der Vorderachse 2 zugeordnet. Mittels der von der Sensoranordnung 13 bereitgestellten und durch das Fahrerassistenzsystem 7 ausgewerteten Messdaten kann die an der Vorderachse 2 auftretende Achslast bestimmt werden.

Weiter zeigt die Darstellung in Fig. 1 schematisch und exemplarisch front- und heckseitig angeordnete Kraftheber 14, insbesondere Dreipunkt-Kraftheber mit Oberlenker und Unterlenker, welche Geräteschnittstellen der Arbeitsmaschine 1 bilden. Die insbesondere als Traktor ausgeführte Arbeitsmaschine 1 weist in der Regel front- und heckseitig eine solche als Kraftheber 14 ausgebildete Geräteschnittstelle auf. Die Kraftheber 14 bilden eine hydraulisch betätigte Vorrichtung an der Arbeitsmaschine 1, um Anbaugeräte 15 anzukuppeln und anzuheben. Dem heckseitigen Kraftheber 14 ist ebenfalls eine Sensoranordnung 13a zugeordnet, mittels der Druck und/oder Lage bzw. Position von Aktoren des Krafthebers 14 bestimmt werden kann. Aktoren des Krafthebers 14 sind unter anderem Hubzylinder sowie Oberlenker und Unterlenker.

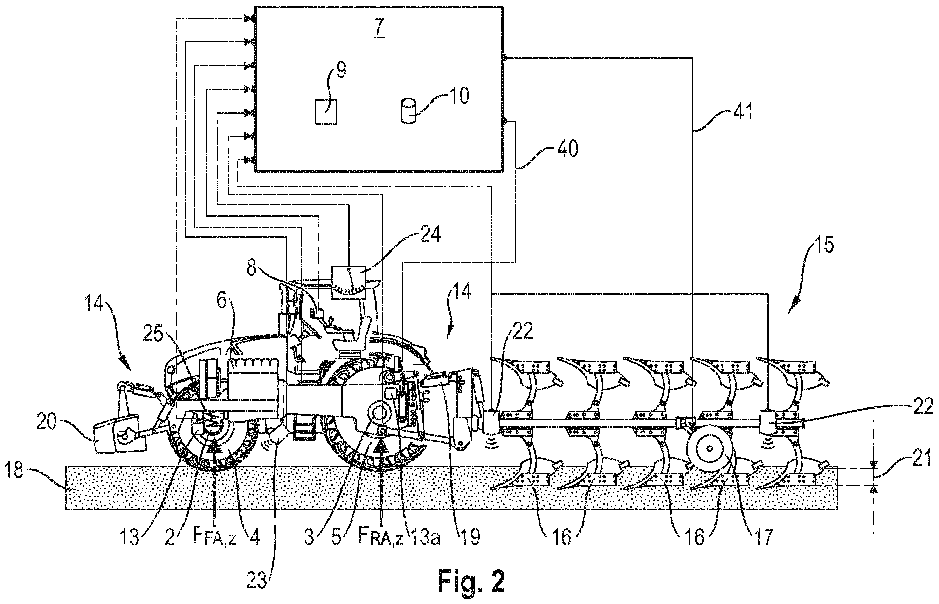

In Fig. 2 ist schematisch das landwirtschaftliche Arbeitssystem aus Arbeitsmaschine 1 und an der Geräteschnittstelle 14 angebautem Anbaugerät 15 während der Durchführung eines landwirtschaftlichen Arbeitsprozesses dargestellt. Bei dem an die Geräteschnittstelle 14 angebauten Anbaugerät 15 handelt es sich im dargestellten Ausführungsbeispiel um ein Bodenbearbeitungsgerät wie einen Pflug, einen Grubber, eine Egge oder dergleichen.

Auf die Gesamteffizienz und die Betriebssicherheit bei Durchführung von landwirtschaftlichen Arbeitsprozessen haben absolute Achslasten und das Achslastverhältnis 24 einen hohen Einfluss. So ist ein ideales Achslastverhältnis beispielsweise von der Bereifung abhängig. Die Lastübertragung vom Anbaugerät 15 auf die Arbeitsmaschine 1 zur Reduktion des Zugkraftbedarfs und Rollwiderstands beeinflusst das Achslastverhältnis 24 und die absoluten Achslasten. Weiterhin wird das Achslastverhältnis 24 während der Durchführung eines Bodenbearbeitungsprozesses vom Bodenwiderstand und/oder dem Füllstand eines Behältnisses des Anbaugerätes 15 beeinflusst. Ein weiterer Aspekt ist, dass eine minimale Vorderachslast nicht unterschritten werden darf, um ein ausreichendes Lenkverhalten sicherstellen zu können. Des Weiteren soll das Achslastverhältnis 24 bzw. sollen die absoluten Achslasten zur Sicherstellung der Lebensdauer des Antriebsstranges innerhalb entworfener Grenzen verbleiben.

Das am heckseitigen Kraftheber 14 angebaute Anbaugerät 15 weist Werkzeuge 16 zur Bodenbearbeitung eines Bodens 18 auf, hier exemplarisch Pflugschare. Weiterhin umfasst das Anbaugerät 15 zumindest eine gewichtsabstützende Einrichtung 17, insbesondere in Gestalt zumindest einer Stützradanordnung. Weiterhin kann ein Zugkraftverstärker 19 vorgesehen sein, welcher einen Teil des Anbaugerätegewichts auf die Arbeitsmaschine 1 überträgt. Der Zugkraftverstärker 19 kann entweder durch Zug am Oberlenker des heckseitigen Krafthebers 14 oder durch einen drückenden Deichselzylinder einen Teil des Anbaugerätegewichts auf die Arbeitsmaschine 1 übertragen.

Am frontseitigen Kraftheber 14 ist ein Gewicht 20 zur Ballastierung angeordnet.

Für die Bearbeitung des Bodens 19 ist die Einstellung einer Arbeitstiefe 21 erforderlich. Die eingestellte Arbeitstiefe 21 kann mittels an dem Anbaugerät 15 angeordneter Sensoreinrichtungen 22 überwacht werden. Eine weitere, an der Arbeitsmaschine 1 angeordnete Sensoreinrichtung 23 kann der Erfassung der Bodenbeschaffenheit dienen.

Das aus den vertikalen Achslasten F_{FA,z} und F_{RA,z} zeitlich an die Durchführung des Arbeitsprozesses gekoppelt zyklisch bestimmte aktuelle Achslastverhältnis 24 kann mittels der Bedien- und Anzeigeeinheit 8 einem Bediener der Arbeitsmaschine 1 angezeigt werden. Die, insbesondere vertikale, Achslast F_{FA,z} und F_{RA,z} an zumindest einer Achse 2, 3 der Arbeitsmaschine 1, insbesondere der Vorderachse 2, kann beispielsweise mittels des Drucks im hydropneumatischen, pneumatischen oder mechanischen Federungssystem 25 bestimmt werden. Eine Alternative sieht eine Kraft-Weg-Messsensorik an der zu vermessenden Achse 2, 3 vor.

Die an den Achsen 2, 3 der Arbeitsmaschine 1 auftretenden Achslasten F_{FA,z}, F_{RA,z} und das darauf basierende Achslastverhältnis 24 werden unter Berücksichtigung einer Arbeitsmaschinen- und Anbaugerätekonfiguration sowie von Betriebsparametern mittels der Recheneinheit 8 des Fahrerassistenzsystems 7 zeitlich an die Durchführung des Arbeitsprozesses gekoppelt zyklisch bestimmt wird. Ein Betriebsparameter ist beispielsweise die Bodenbeschaffenheit, die durch die Sensoranordnung 23 bestimmt wird.

Hierzu kann die bestehende Arbeitsmaschinen- und Anbaugerätekonfiguration durch den Bediener des Arbeitssystems zumindest teilweise vorgegeben und/oder zumindest teilweise automatisch durch das Fahrerassistenzsystem 7 ermittelt werden. Somit kann der Bestimmung der sich dynamisch ändernden Achslasten F_{FA,z}, F_{RA,z} eine initiale Ballastierung des Arbeitssystems zugrunde gelegt werden, welche die für die nachfolgende Bestimmung während des Arbeitsprozesses notwendigen Ausgangswerte darstellen. Hierbei können die Arbeitsmaschinenkonfiguration und die Anbaugerätekonfiguration zumindest teilweise durch den Bediener des Arbeitssystems aus einer in der Speichereinheit 10 des Fahrerassistenzsystems 7 hinterlegten Datenbank ausgewählt werden. Alternativ oder zusätzlich kann das Fahrerassistenzsystem 7 in einem interaktiven Dialog mit dem Bediener zumindest einen Teil der Arbeitsmaschinenkonfiguration und/oder der Anbaugerätekonfiguration ermitteln. Alternativ oder zusätzlich kann das Fahrerassistenzsystem 7 zur Bestimmung des Anbaugerätes 15 eingerichtet sein. Hierzu kann das Fahrerassistenzsystem 7 dazu eingerichtet sein, beispielsweise mit einer Anbaugerätesteuerung zu kommunizieren oder einen Datenspeicher an dem Anbaugerät 15 auszulesen.

Gegenstand der Arbeitsmaschinenkonfiguration sind unter anderem die Masse der Arbeitsmaschine 1, die Schwerpunktlage der leeren Arbeitsmaschine 1, Masse und Lage zusätzlich an der Arbeitsmaschine 1 angeordneter Gewichte 20, die Art der Geräteschnittstelle 14 an der Arbeitsmaschine 1 zur Verbindung mit dem Anbaugerät 15.

Gegenstand der Anbaugerätekonfiguration sind unter anderem die Masse des Anbaugerätes 15, die Schwerpunktlage des Anbaugerätes 15, der Kraftangriffspunkt der Bodenwiderstandskräfte/Rollwiderstände innerhalb des Anbaugerätes 15, die Lage von zumindest der optional am Anbaugerät 15 angeordneten gewichtsabstützenden Einrichtung 17. Beispielsweise kann eine Abschätzung der Bodenwiderstandskräfte an den Werkzeugen 16 zur Bodenbearbeitung des Anbaugerätes 15 über Zugleistung und Fahrzeuggeschwindigkeit erfolgen. Die Zugleistung wiederum kann mittels Antriebsmotorleistung, Getriebewirkungsgrad, Antriebsstrangwirkungsgrad sowie einem Wirkungsgrad der Bodeneingriffsmittel 4, 5 bestimmt werden. Alternativ kann die Zugleistung mittels Getriebeausgangsleistung, Antriebsstrangwirkungsgrad sowie einem Wirkungsgrad der Bodeneingriffsmittel 4, 5 abgeschätzt werden. Andere Betriebsparameterkombinationen zur Abschätzung der Zugleistung sind denkbar.

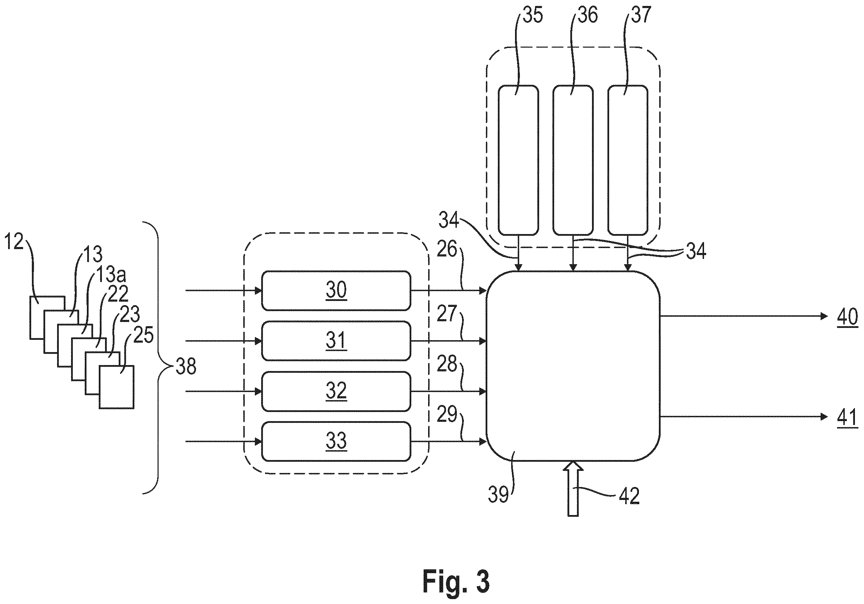

In Fig. 3 ist eine schematische Übersicht der Struktur des Fahrerassistenzsystems 7 dargestellt.

Zur Einstellung des Krafthebers 14 durch das Fahrerassistenzsystem 7 werden Ist-Datensätze 26, 27, 28, 29 zeitlich an die Durchführung des Arbeitsprozesses gekoppelt zyklisch bestimmt. Ein an den Achsen 2, 3 aktuell bestehendes Achslastverhältnis 24 wird als ein Ist-Datensatz "Achslastverhältnis" 26 bestimmt. Unter Verwendung zumindest eines weiteren Ist-Datensatzes 27, 28, 29 werden unter gleichzeitiger Berücksichtigung mehrerer sich gegenseitig beeinflussender Optimierungszielgrößen 42 Anweisungen zur Ansteuerung der Kraftheber 14, insbesondere des heckseitigen Krafthebers 14, durch das Fahrerassistenzsystem 7 generiert.

Hierzu können als weitere, sich insbesondere dynamisch ändernde, Ist-Datensätze ein Ist-Datensatz "Schlupf" 27, ein Ist-Datensatz "Arbeitstiefe" 28, und/oder ein Ist-Datensatz "Reifeninnendruck" 29 bestimmt werden. Diese Ist-Datensätze 27, 28, 29 werden ebenfalls zeitlich an die Durchführung des Arbeitsprozesses gekoppelte zyklisch bestimmt. Der Ist-Datensatz "Schlupf" 27 wird durch eine Schlupfbestimmung 31, der Ist-Datensatz "Arbeitstiefe" 28 durch eine Arbeitstiefenbestimmung 32 von Werkzeugen 16 des als Bodenbearbeitungsgerätes ausgeführten Anbaugerätes 15 und der Ist-Datensatz "Reifeninnendruck" 29 durch eine Reifeninnendruckbestimmung 33 von den als Reifen ausgeführten Bodeneingriffsmitteln 4, 5 bestimmt. Die Bestimmung des Achslastverhältnisses 24 als, sich insbesondere dynamisch ändernder, Ist-Datensatz 26 ermöglicht es, die Achslasten zwischen den Achsen 2, 3 in einen optimalen Bereich zu verschieben. Mittels der Schlupfbestimmung 31 zur Bestimmung des, sich insbesondere dynamisch ändernden, Ist-Datensatzes "Schlupf" 27 kann das Antreiben der Arbeitsmaschine 1 im traktionsfähigen Bereich abgesichert werden. Die Arbeitstiefenbestimmung 32 zur Bestimmung des, sich insbesondere dynamisch ändernden, Ist-Datensatzes "Arbeitstiefe" 28 kann zur Verringerung des Rollwiderstands am Anbaugerät 15 verwendet werden. Ein weiterer Aspekt der Bestimmung des Ist-Datensatzes "Arbeitstiefe" 28 mittels der Arbeitstiefenbestimmung kann in der Verwendung zur Steigerung des Zugkraftpotentials der Arbeitsmaschine 1 unter Berücksichtigung der begrenzten Tragfähigkeit der Reifen 4, 5 sowie der Achsen 2, 3 der Arbeitsmaschine 1 bestehen. Die Reifeninnendruckbestimmung zur Bestimmung des, sich insbesondere dynamisch ändernder, Ist-Datensatzes "Reifeninnendruck" 29 kann zur Einhaltung zulässiger Achslasten für einen eingestellten Reifeninnendruck als ein Soll-Datensatz 34 oder zumindest als ein Teilparameter des Soll-Datensatzes 34 verwendet werden. Dabei kann berücksichtigt werden, dass maximal zulässige Achslasten als ein weiterer Soll-Datensatz 34 für den aktuell eingestellten Reifeninnendruck nicht überschritten werden.

Zur Bestimmung von Abweichungen der zur Durchführung einer Mehrzielregelung 39 verwendeten Ist-Datensätze 26, 27, 28, 29 werden Soll-Datensätze 34 vorgegeben, die aus einer externen und/oder internen Datenbank 35 abgerufen, mittels zumindest eines in der Speichereinheit 10 hinterlegten kennlinienbasierenden Expertensystems 36 bestimmt und/oder durch einen Bediener mittels einer Mensch-Maschine-Schnittstelle 37, insbesondere auf einem natürlichsprachigen, interaktiven Dialog basierend, eingegeben werden. Die Mensch-Maschine-Schnittstelle 37 kann die Bedien- und Anzeigeeinheit 8 der Arbeitsmaschine 1 sein. Alternativ kann die Mensch-Maschine-Schnittstelle 37 eine mobile Datenverarbeitungsvorrichtung sein, welche zum Datenaustausch mit dem Fahrerassistenzsystem 7 eingerichtet ist. Die Soll-Datensätze 34 werden für jede Optimierungszielgröße 42 aus dem zumindest einen Expertensystem 36, den Nutzereingaben 37 und/oder den Datenbanken 35 abgerufen oder bestimmt.

Die verschiedenen, in Fig. 1 und 2 lediglich exemplarisch dargestellten, Sensoranordnungen 12, 13, 22, 25 stellen erforderliche Messdaten 38 bereit, die den durch die Recheneinheit 9 des Fahrerassistenzsystems 7 jeweils auszuführenden Algorithmen zur Achslastbestimmung 30, zur Schlupfbestimmung 31, zur Arbeitstiefenbestimmung 32 und/oder zur Reifeninnendruckbestimmung 33 bereitgestellt werden.

Vorzugsweise können als Optimierungszielgrößen 42 ein Ziel-Achslastverhältnis, eine Ziel-Belastung von gewichtsabstützenden Einrichtungen 17 am Anbaugerät 15, eine Ziel-Arbeitstiefe, ein Ziel-Schlupfgrenzwert und eine vom Soll-Reifeninnendruck als ein Soll-Datensatz 34 abhängige Maximal-Achslast durch die dynamische Mehrzielregelung 39 bestimmt werden. Den verschiedenen Optimierungszielgrößen 42 liegen eine Last- und Rollreibungsreduktion an den gewichtsabstützenden Einrichtungen 17, eine Lasterhöhung bzw. Lastverlagerung auf die Arbeitsmaschine 1 für ein höheres Zugkraftpotential, eine agronomisch sinnvolle Arbeitstiefe 21 des als Bodenbearbeitungsgerät ausgeführten Anbaugerätes 15 sowie das Verhindern von Überlastungen der Reifen zur Vermeidung von Schäden und erhöhtem Verschleiß als Zielstellungen zugrunde.

Durch die dynamische Mehrzielregelung 39, welche dem durchzuführenden Optimierungsprozess zugrunde gelegt wird, kann die Gesamteffizienz des landwirtschaftlichen Arbeitssystems bei der Durchführung des landwirtschaftlichen Arbeitsprozesses gesteigert werden.

Das Verschieben der Achslastverteilung 24 zwischen Vorderachs 2 und Hinterachse 3 der Arbeitsmaschine in einen optimalen Bereich, welcher sich aus der Optimierungszielgröße 42 "Ziel-Achslastverhältnis" ergibt, erfolgt basierend auf der Achslastmessung an der Vorderachse 2, einer Abschätzung der Werkzeugkräfte, der Messung von Steigung und Beschleunigung sowie der Berechnung basierend auf Nutzereingaben zur Geometrie und Masse des Arbeitssystems, die zur Bestimmung des aktuellen Ist-Datensatzes "Achslastverhältnis" 26 verwendet werden. Dadurch können Hubbewegungen am Kraftheber, z.B. auf Bergkuppen oder in Tälern, die zu einer Verlagerung von Gewichts- und Prozesskräften auf die Arbeitsmaschine 1 bzw. die gewichtsabstützende Einrichtung 17 am Anbaugerät 15 führen, berücksichtigt werden.

Dabei kann die Belastung von gewichtsabstützenden Einrichtungen 17 am Anbaugerät 15, wie Rückverdichtungsrollen, Stützrädern oder dergleichen, ohne zusätzliche Sensorik an diesen ermittelt. Die Mehrzielregelung 39 reduziert die Belastung zur Verringerung des Rollwiderstands am Anbaugerät 15 sowie zu einer Steigerung des Zugkraftpotentials der Arbeitsmaschine 1 unter Berücksichtigung der begrenzten Tragfähigkeit von Reifen 4, 5 und Achsen 2, 3 der Arbeitsmaschine 1.

Die Arbeitstiefe 21 der Werkzeuge 16, wie z.B. Pflugschar oder Grubberzinken, gegenüber der Oberfläche des Bodens 18 zur Absicherung der Optimierungszielgröße 42 "Ziel-Arbeitstiefe" kann durch die Messung und Berechnung anhand der detektierten Position des Krafthebers 14 erfolgen. Zusätzlich oder alternativ kann eine Messung und Berechnung mittels vom Arbeitstiefensensor 22 bereitgestellten Messdaten durchgeführt werden, um den aktuellen Ist-Datensatz "Arbeitstiefe" 28 zu bestimmen.

Mittels der Bestimmung des Ist-Datensatzes "Schlupf" 27 kann das Antreiben der Arbeitsmaschine 1 im traktionsfähigen Bereich als Optimierungszielgröße 42 Ziel-Schlupfgrenzwert abgesichert werden. Zur Schlupfbestimmung 31 können Fahrzeuggeschwindigkeit und Reifenumfangsgeschwindigkeit bestimmt werden. Die Reifenumfangsgeschwindigkeit kann mittels eines an der Achse 2, 3 angeordneten Drehzahlsensors sowie in der Arbeitsmaschinenkonfiguration hinterlegten Daten zur Bereifung an der zumindest einen angetriebenen Achse 2, 3 der Antriebsmaschine 1 ermittelt werden. Die Messung der der Fahrzeuggeschwindigkeit kann zusätzlich oder alternativ mittels Radar, GPS, oder vergleichbarer Sensoren durchgeführt werden.

Zur Einhaltung der Optimierungszielgröße 42 "Maximal-Achslast" wird der aktuelle Ist-Datensatz "Reifeninnendruck" 29 durch eine sensorbasierende Reifeninnendruckbestimmung 33 von den als Reifen ausgeführten Bodeneingriffsmitteln 4, 5 durch das Fahrerassistenzsystem 7 bestimmt.

Im Ergebnis generiert die dynamische Mehrzielregelung 39 optimierte Anweisungen 40 zur Ansteuerung des Krafthebers 14, hier und vorzugsweise des Oberlenkers und des Unterlenkers des als Dreipunkt-Kraftheber ausgeführten Krafthebers 14, welche die verschiedenen Optimierungszielgrößen 42 und die damit verbundenen Vorgaben und Einflüsse berücksichtigen.

Dadurch kann eine der Überlastung der Reifen 4, 5 sowie der Achsen 2,3 vermieden werden. Es kann eine angemessene Last auf den gewichtsabstützenden Einrichtungen 17 am Anbaugerät 15 sichergestellt werden. Es kann das Einhalten eines definierten Arbeitstiefenbereichs ermöglich werden. Insbesondere kann eine ortsabhängige Arbeitstiefe 21 eingehalten werden. Es wird eine für die Durchführung des Arbeitsprozesses ausreichende Zugkraft bereitgestellt. Das Durchrutschen angetriebener Reifen 4, 5 kann vermieden werden.

Darüber hinaus können durch das Fahrerassistenzsystem 7 unter gleichzeitiger Berücksichtigung der sich gegenseitig beeinflussenden Optimierungszielgrößen 42 Anweisungen 41 zur Ansteuerung von Aktoren des Anbaugerätes 15 generiert werden.

Dabei kann wenigstens ein Aktor der zumindest einen gewichtsabstützenden Einrichtung 17 und/oder wenigstens ein Aktor zur Verstellung der Arbeitstiefe 21 der Werkzeuge 16 des Anbaugerätes 15 angesteuert werden. Hierzu kann das Fahrerassistenzsystem 7 eine Anweisung 41 generieren, um durch die Ansteuerung der Aktoren des Anbaugerätes 15 eine Höhenverstellung der gewichtsabstützenden Einrichtung 17 zur Reduzierung der Last auf dieser zu bewirken, um mehr Last auf der Arbeitsmaschine 1 abzustützen.

Weiterhin kann durch das Fahrerassistenzsystem 7 eine Anweisung 41 zur simultanen Höhenverstellung des Krafthebers 14 und der zumindest einen gewichtsabstützenden Einrichtung 17 des Anbaugerätes 15 generiert werden. Durch eine simultane Höhenverstellung des Heckkrafthebers 14 und der eingestellten Höhe der zumindest einen gewichtsabstützenden Einrichtung 17 kann eine Verstellung der Arbeitstiefe 21 erreicht werden.

### Bezugszeichenliste

| | | | |
|---|---|---|---|
| 1 | Arbeitsmaschine | 33 | Reifeninnendruckbestimmung |
| 2 | Achse/Vorderachse | 34 | Soll-Datensatz |
| 3 | Achse/Hinterachse | 35 | Datenbank |
| 4 | Reifen | 36 | Expertensystem |
| 5 | Reifen | 37 | Mensch-Maschine-Schnittstelle |
| 6 | Antriebseinheit | 38 | Messdaten |
| 7 | Fahrerassistenzsystem | 39 | Mehrzielregelung |
| 8 | Bedien- und Anzeigeeinheit | 40 | Anweisung |
| 9 | Recheneinheit | 41 | Anweisung |
| 10 | Speichereinheit | 42 | Optimierungszielgrößen |
| 11 | Behältnis | | |
| 12 | Füllstandsensor | F_{FA,z} | Vertikale Achslast von 2 |
| 13 | Sensoranordnung | F_{RA,z} | Vertikale Achslast von 3 |
| 13a | Sensoranordnung | | |
| 14 | Kraftheber | | |
| 15 | Anbaugerät | | |
| 16 | Werkzeug | | |
| 17 | Gewichtsabstützende Einrichtung | | |
| 18 | Boden | | |
| 19 | Zugkraftverstärker | | |
| 20 | Gewicht | | |
| 21 | Arbeitstiefe | | |
| 22 | Sensoreinrichtung | | |
| 23 | Sensoreinrichtung | | |
| 24 | Achslastverteilung | | |
| 25 | Federungssystem | | |
| 26 | Ist-Datensatz "Achslastverhältnis" | | |
| 27 | Ist-Datensatz "Schlupf" | | |
| 28 | Ist-Datensatz "Arbeitstiefe" | | |
| 29 | Ist-Datensatz "Reifeninnendruck" | | |
| 30 | Achslastbestimmung | | |
| 31 | Schlupfbestimmung | | |
| 32 | Arbeitstiefenbestimmung | | |

## Patentansprüche

1. Verfahren zum Betreiben eines landwirtschaftlichen Arbeitssystems, umfassend eine zumindest zwei Achsen (2, 3) aufweisende landwirtschaftliche Arbeitsmaschine (1) mit zumindest einem Kraftheber (14) sowie ein Anbaugerät (15), welches mittels des Krafthebers (14) mit der Arbeitsmaschine (1) zur Durchführung eines landwirtschaftlichen Arbeitsprozesses verbunden wird, sowie ein den Betrieb der Arbeitsmaschine (1) optimierendes Fahrerassistenzsystem (7), welches über eine Recheneinheit (9), eine Speichereinheit (10) und eine Bedien- und Anzeigeeinheit (8) verfügt, wobei durch die Recheneinheit (9) von zumindest einer Sensoranordnung (13) generierte Informationen, externe Informationen und in der Speichereinheit (10) hinterlegte Informationen verarbeitet werden, dass eine Achslast (F_{FA,z}, F_{RA,z}) an zumindest einer der Achsen (2, 3) mittels der zumindest einen Sensoranordnung (13) bestimmt wird, **dadurch gekennzeichnet, dass** zur Einstellung des Krafthebers (14) durch das Fahrerassistenzsystem (7) Ist-Datensätze (26, 27, 28, 29) zeitlich an die Durchführung des Arbeitsprozesses gekoppelt zyklisch bestimmt werden, wobei ein an den Achsen (2, 3) aktuell bestehendes Achslastverhältnis (24) als ein Ist-Datensatz (26) bestimmt wird und unter Verwendung zumindest eines weiteren zu bestimmenden Ist-Datensatzes (27, 28, 29) durch das Fahrerassistenzsystem (7) unter gleichzeitiger Berücksichtigung mehrerer sich gegenseitig beeinflussender Optimierungszielgrößen (42) Anweisungen (40) zur Ansteuerung des Krafthebers (14) generiert werden.

2. Verfahren nach Anspruch 1, **dadurch gekennzeichnet, dass** zur Bestimmung weiterer Ist-Datensätze (27, 28, 29) eine zeitlich an die Durchführung des Arbeitsprozesses gekoppelte zyklisch bestimmte Schlupfbestimmung (31), Arbeitstiefenbestimmung (32) von Werkzeugen (16) eines als Bodenbearbeitungsgerät ausgeführten Anbaugerätes (15) und/oder Reifeninnendruckbestimmung (33) von als Reifen (4, 5) ausgeführten Bodeneingriffsmitteln verwendet werden.

3. Verfahren nach Anspruch 1 oder 2, **dadurch gekennzeichnet, dass** zur Bestimmung von Abweichungen der zur Mehrzielregelung (39) verwendeten Ist-Datensätze (26, 27, 28 ,29) Soll-Datensätze (34) vorgegeben werden, die aus einer Datenbank (35) abgerufen, mittels eines, insbesondere in der Speichereinheit (10) hinterlegten, kennlinienbasierenden Expertensystems (36) bestimmt und/oder durch einen Bediener mittels einer Mensch-Maschine-Schnittstelle (37), insbesondere auf einem natürlichsprachigen, interaktiven Dialog basierend, eingegeben werden.

4. Verfahren nach einem der Ansprüche 1 bis 3, **dadurch gekennzeichnet, dass** als Optimierungszielgrößen (42) ein Ziel-Achslastverhältnis, eine Ziel-Belastung von zumindest einer gewichtsabstützenden Einrichtung (17) am Anbaugerät (15), eine Ziel-Arbeitstiefe, ein Ziel-Schlupfgrenzwert und eine vom Soll-Reifeninnendruck abhängige Maximal-Achslast bestimmt werden.

5. Verfahren nach einem der Ansprüche 1 bis 4, **dadurch gekennzeichnet, dass** die an den Achsen (2, 3) der Arbeitsmaschine (1) auftretenden Achslasten (F_{FA,z}, F_{RA,z}) und das darauf basierende Achslastverhältnis (24) unter Berücksichtigung einer Arbeitsmaschinen- und Anbaugerätekonfiguration sowie von Betriebsparametern mittels der Recheneinheit (8) des Fahrerassistenzsystems (7) zeitlich an die Durchführung des Arbeitsprozesses gekoppelt zyklisch bestimmt werden.

6. Verfahren nach Anspruch 5, **dadurch gekennzeichnet, dass** für die Bestimmung der Achslasten (F_{FA,z}, F_{RA,z}) und des Achslastverhältnisses (24) zwischen an dem Kraftheber (14) angebauten Anbaugeräten (15) und angehängten Anbaugeräten (15) unterschieden wird.

7. Verfahren nach Anspruch 6, **dadurch gekennzeichnet, dass** für die Bestimmung der Achslasten (F_{FA,z}, F_{RA,z}) und des Achslastverhältnisses (24) bei einem angehängten oder angebauten Anbaugerät (15) zur Bodenbearbeitung in einem ersten Schritt auf Werkzeuge (16) des Anbaugerätes (15) ausgeübte Werkzeugkräfte über Zugleistung und aktuelle Fahrgeschwindigkeit, und dass bei einem angehängten Anbaugerät (15) im ersten Schritt zusätzlich ein von dem Anbaugerät (15) auf die Arbeitsmaschine (1) wirkendes Koppelmoment sowie eine vertikale Koppelkraft mittels Anbaugerätegeometrie und der Bestimmung eines Momentengleichgewichts um zumindest eine gewichtsabstützenden Einrichtung (17) des Anbaugerätes (15) bestimmt werden, und dass in einem zweiten Schritt bei einem angehängten oder angebauten Anbaugerät (15) eine auf eine der Achsen (2, 3), insbesondere die Hinterachse (3), einwirkende vertikale Achslast (F_{FA,z}, F_{RA,z}) bestimmt wird.

8. Verfahren nach einem der vorangehenden Ansprüche, **dadurch gekennzeichnet, dass** zur Arbeitstiefenbestimmung (32) von Werkzeugen (16) des Anbaugerätes (15) die Position des Krafthebers (14) durch Messung und/oder Berechnung bestimmt wird.

9. Verfahren nach einem der vorangehenden Ansprüche, **dadurch gekennzeichnet, dass** die Arbeitstiefenbestimmung (32) von Werkzeugen (16) des Anbaugerätes (15) anhand von Sensordaten zumindest eines Arbeitstiefensensors (22) am Anbaugerät (15) durchgeführt wird.

10. Verfahren nach einem der vorangehenden Ansprüche, **dadurch gekennzeichnet, dass** zur Schlupfbestimmung (31) eine Fahrzeuggeschwindigkeit und eine Reifenumfangsgeschwindigkeit bestimmt werden.

11. Verfahren nach einem der vorangehenden Ansprüche, **dadurch gekennzeichnet, dass** durch das Fahrerassistenzsystem (7) zur Ansteuerung des Krafthebers (14) unter gleichzeitiger Berücksichtigung der sich gegenseitig beeinflussender Optimierungszielgrößen (42) eine optimale Position bestimmt wird.

12. Verfahren nach einem der vorangehenden Ansprüche, **dadurch gekennzeichnet, dass** durch das Fahrerassistenzsystem (7) unter gleichzeitiger Berücksichtigung der sich gegenseitig beeinflussender Optimierungszielgrößen (42) Anweisungen (41) zur Ansteuerung von Aktoren des Anbaugerätes (15) generiert werden.

13. Verfahren nach Anspruch 12, **dadurch gekennzeichnet, dass** wenigstens ein Aktor der zumindest einen gewichtsabstützenden Einrichtung (17) und/oder wenigstens ein Aktor zur Verstellung der Arbeitstiefe (21) von Werkzeugen (16) des Anbaugerätes (15) angesteuert wird.

14. Verfahren nach Anspruch 12 oder 13, **dadurch gekennzeichnet, dass** durch das Fahrerassistenzsystem (7) eine simultane Höhenverstellung des Krafthebers (14) und der zumindest einen gewichtsabstützenden Einrichtung (17) durchgeführt wird.

15. Landwirtschaftlichen Arbeitssystems, umfassend eine zumindest zwei Achsen (2, 3) aufweisende landwirtschaftliche Arbeitsmaschine (1) mit zumindest einem Kraftheber (14) sowie ein Anbaugerät (15), welches mittels des Krafthebers (14) mit der Arbeitsmaschine (1) zur Durchführung eines landwirtschaftlichen Arbeitsprozesses verbunden ist, sowie ein den Betrieb der Arbeitsmaschine (1) optimierendes Fahrerassistenzsystem (7), welches über eine Recheneinheit (9), eine Speichereinheit (10) und eine Bedien- und Anzeigeeinheit (8) verfügt, wobei die Recheneinheit (9) dazu eingerichtet ist von zumindest einer Sensoranordnung (13) generierte Informationen, externe Informationen und in der Speichereinheit (10) hinterlegte Informationen zu verarbeiten, wobei zur Bestimmung einer Achslast (F_{FA,z}, F_{RA,z}) an zumindest einer der Achsen (2, 3) eine Sensoranordnung (13) vorgesehen ist, **dadurch gekennzeichnet, dass** das Fahrerassistenzsystem (7) dazu eingerichtet ist, zur Einstellung des Krafthebers (14) durch das Fahrerassistenzsystem (7) Ist-Datensätze (26, 27, 28, 29) zeitlich an die Durchführung des Arbeitsprozesses gekoppelt zyklisch zu bestimmen, wobei ein an den Achsen (2, 3) bestehendes Achslastverhältnis (24) als ein Ist-Datensatz (26) bestimmt wird, und dass das Fahrerassistenzsystem (7) dazu eingerichtet ist, unter Verwendung der Ist-Datensätze (26, 27, 28, 29) und gleichzeitiger Berücksichtigung mehrerer sich gegenseitig beeinflussender Optimierungszielgrößen (42) Anweisungen (40) zur Ansteuerung des Krafthebers (14) zu generieren.
